# EUROPEAN PATENT APPLICATION

(11) **EP 1 826 725 A1**
(43) Date of publication of application: **29.08.2007**
(21) Application number: 05785254.3
(22) Date of filing: 22.09.2005
(51) Int. Cl.: G06T 15/50, G06T 15/00

(54) **PLOTTING DEVICE AND PLOTTING METHOD**

(30) Priority: 22.11.2004 JP 2004338087
(71) Applicant: Sony Computer Entertainment Inc., Tokyo 107-0062 (JP)
(72) Inventor: NAOI, Junichi, i-Aoyama, Minato-ku, Tokyo 1070062; (JP)
(74) Representative: Müller, Frithjof E.
(86) International application number: PCT/JP2005/017492
(87) International publication number: WO 2006/054389

(57) **Abstract**

A reference address generation unit (72) receives a UV coordinate value from a Shader (30), converts it into a reference address for referencing a texture, and references a texture map or a command map stored in a texture memory (76) according to the reference address. The value referenced from the texture map is supplied to an interpolation unit (74) and the value referenced from the command map is written into a command buffer (52). The interpolation unit (74) performs texture mapping to generate a color value corresponding to the UV coordinate value of the pixel and supplies the color value via a data path to the Shader (30). A command decoder (62) reads out a command code held in the command buffer (52), decodes the command code, and supplies a control signal for executing the decoded command, to the Shader (30).

## Description

### BACKGROUND OF THE INVENTION

### 1. Field of the Invention

The present invention relates to a rendering processing apparatus and a rendering processing method, by which rendering data is arithmetically processed.

### 2. Description of the Related Art

Rendering engines for use in three-dimensional computer graphics are operating like processors with programmability in order to handle complex and sophisticated shading algorithms. In particular, the pixel shaders constituting the core of the rendering engine are no longer hardware with fixed graphics functions and resemble processors which have built-in arithmetic units with instruction sets much like those of a CPU and which are programmable to accommodate additional functions in a flexible fashion.

In the programmable pixel shaders in the related arts, subsequent to the polygon set up for a three-dimensional object to be rendered, the pixel data in which polygons are respectively rasterized is arithmetically processed to compute final color values. At this time of processing, the shader program is retained on an object basis to be processed. Thus, an identical shader program is to be executed on all pixels within a polygon.

In order to generate high-quality rendering data, it is unsatisfactory to merely perform an identical process on the polygons of an object, and it is therefore necessary to do the rendering in more detail on a pixel-to-pixel basis. Since an identical shader program is executed on an object basis in the conventional pixel shaders, there is no other way except that a branch is caused by a subroutine call in the program to execute an individual program in the branched subroutine, or a conditional execution is performed by controlling with a flag indicative of whether or not each program is to be executed, in order to make programmability available for every pixel. The conditional branching in the shader program on a pixel-to-pixel basis, however, increases the branch penalty, posing a problem that the processing speed slows down in the overall program. Also, in the conditional execution, a part that is not to be executed is also counted up in the execution time. As stated, different rendering processes on a pixel-to-pixel basis drastically degrade efficiency.

### SUMMARY OF THE INVENTION

The present invention has been made in view of the above circumstance and has a general purpose of providing a rendering processing technique, by which programmability is available on each arithmetic rendering process.

In order to address the above problem, according to an aspect of the invention, there is provided a rendering processing apparatus comprising: an instruction map storage unit which stores an instruction map in which data relating to an instruction is stored in association with two-dimensional coordinates; an arithmetic processor which executes the instruction on the data of each unit of rendering of the rendering object subject to a rendering arithmetic processing on a unit-of-rendering basis; and a controller which receives the data designating the two-dimensional coordinates for referring to the instruction map from the arithmetic processor, reads out the data relating to the instruction corresponding to the designated two-dimensional coordinates from the instruction map, and supplies the data to the arithmetic processor.

Herein, "unit of rendering" denotes each unit for rendering arithmetic processing of the rendering object, and is composed of, for example, a single pixel or may be a group of plural pixels. "Data relating to an instruction" denotes data relating to the instruction applied to the each unit for rendering arithmetic processing, and includes the instruction code or the branch target address of the program for rendering arithmetic processing.

The arithmetic processor may execute the instructions on plural units of rendering in parallel, or may execute the instructions on the plural units of rendering in succession. The arithmetic processor may execute the instructions on the unit of rendering by pipeline processing.

In the above aspect, in performing the arithmetic processing on the unit of rendering, the instruction is switched for each unit of rendering by referring to the instruction map.

Another aspect of the invention is also a rendering processing apparatus comprising: a map storage unit which stores a map in which a given value is stored in association with two-dimensional coordinates; an arithmetic processor which executes an instruction on data of each unit of rendering of a rendering object subject to a rendering arithmetic processing on a unit-of-rendering basis; and a controller which receives the data designating the two-dimensional coordinates for referring to the map from the arithmetic processor, reads a value corresponding to the designated two-dimensional coordinates from the map, and supplies the value to the arithmetic processor, wherein the map stores an attribute value of a texture to be applied to the unit of rendering or the data relating to the instruction to be applied to the unit of rendering, in association with the two-dimensional coordinates.

Herein, "attribute value of texture" denotes the value relating to the texture, and includes, for example, color values of the texture image or the index of the color values. "Map" stores any value in association with the two-dimensional coordinates, and has a data structure in which the coordinate is designated and the value corresponding thereto is referred to.

In the above aspect, by use of the configuration of the texture mapping, the instruction is applicable to each unit of rendering. In addition, the data structure of the map is commonly used for storing the attribute value of the texture or the data relating to the instruction, thereby allowing the referenced value in the map to be applicable to the unit of rendering by referring to the map without distinguishing whether the value stored in the map is the attribute value of the texture or the data relating to the instruction.

Yet another aspect of the invention is also a rendering processing apparatus comprising: a rendering processing apparatus comprising: an arithmetic processor which executes an instruction on data of each unit of rendering of a rendering object subject to a rendering arithmetic processing on a unit-of-rendering basis; a frame buffer which stores rendering data derived from rendering performed by the arithmetic processor on each unit of rendering; and a controller which supplies the instruction to be applied to the unit of rendering to the arithmetic processor, wherein the frame buffer stores an instruction map in which the data relating to the instruction is stored in association with two-dimensional coordinates; and the controller receives the data designating the two-dimensional coordinates for referring to the instruction map from the arithmetic processor, reads the data relating to the instruction corresponding to the designated two-dimensional coordinates, and supplies the data to the arithmetic processor.

In the above aspect, the instruction map stored in the frame buffer is referred to, thereby allowing the data transfer from the instruction map to be performed at high speed and the processing performance to be enhanced in the execution of switching the instruction on each unit of rendering.

Further another aspect of the invention is also a rendering processing apparatus comprising: an arithmetic processor which executes an instruction on data of each unit of rendering of a rendering object subject to a rendering arithmetic processing on a unit-of-rendering basis; a frame buffer which stores rendering data derived from rendering performed by the arithmetic processor on each unit of rendering; and a controller which supplies the instruction to be applied to the unit of rendering to the arithmetic processor, wherein the controller acquires at least a portion of the rendering data stored in the frame buffer as intermediate data, and uses the rendering data for the instruction to be applied on the unit of rendering.

In the above aspect, the value in the frame buffer may be used for the instruction on each unit of rendering. The frame buffer corresponds to the rendering data of the rendering object subjected to the rendering arithmetic processing by the arithmetic processor, on one-to-one basis. Therefore, the address in the frame buffer is designated and the necessary value is immediately retrieved, so as to use for the program of the referring arithmetic processing.

Further another aspect of the invention is also a rendering processing apparatus comprising: a register which retains data of each unit of rendering of the rendering object subject to a rendering arithmetic processing on a unit-of-rendering basis; an arithmetic unit which reads the data of the unit of rendering from the register, and executes an instruction; and a controller which supplies the instruction to be applied to the unit of rendering to the arithmetic unit, wherein the register retains a processing result performed by the arithmetic unit, as intermediate data; the controller acquires at least a portion of the intermediate data retained in the register, and uses the data for the instruction to be applied to the unit of rendering.

In the above aspect, the processing result performed by the arithmetic unit is available for the instruction on each unit of rendering.

Further another aspect of the invention is a rendering processing method comprising: referring to an instruction map in which data relating to an instruction to be applied to each unit of rendering of the rendering object subject to a rendering arithmetic processing on a unit-of-rendering basis, in association with two-dimensional coordinates, so as to read the data relating to the instruction corresponding to two-dimensional parameter coordinates relating to a surface of the rendering object, to which the instruction map is applied, thereby performing an arithmetic processing on the each unit of rendering in accordance with the data relating to the instruction read out.

Further another aspect of the invention is also a rendering processing method comprising: referring to a map in which an attribute value of a texture to be applied to each unit of rendering of the rendering object subject to a rendering arithmetic processing on a unit-of-rendering basis or data relating to an instruction to be applied to the each unit of rendering is stored in association with two-dimensional coordinates, so as to read a value corresponding to two-dimensional parameter coordinates relating to a surface of the rendering object, to which the map is applied, thereby performing an arithmetic processing on the unit of rendering in accordance with the instruction, when the value read out is the data relating to the instruction, or applying the texture to the unit of rendering in accordance with the attribute value, when the value read out is the attribute value of the texture.

Further another aspect of the invention is a data structure of an instruction map which stores data relating to an instruction to be applied to each unit of rendering of the rendering object subject to a rendering arithmetic processing on a unit-of-rendering basis in association with two-dimensional parameter coordinates the two-dimensional parameter coordinates relating to a surface of the rendering object.

Optional combinations of the aforementioned constituting elements and implementations of the invention in the form of methods, processors, apparatus, systems, computer programs, data structures etc. may also be practiced as additional modes of the present invention.

According to the present invention, high-performance programmability is achieved for each unit of rendering and the processing performance is enhanced.

### BRIEF DESCRIPTION OF THE DRAWINGS

Fig. 1 is a configuration diagram of a rendering processing apparatus according to an embodiment of the invention;
Fig. 2 shows a control mechanism of a shader unit of Fig. 2, in detail;
Fig. 3 is a flowchart of a rendering control procedure performed by a controller of Fig. 2;
Fig. 4 is a flowchart of a decoding procedure of a shader program performed by an instruction decoder of Fig. 2;
Fig. 5A through Fig.5C show examples of the shader program stored in an instruction memory of Fig. 2;
Fig. 6 shows an example of an instruction map stored in a texture memory of Fig. 2; and
Fig. 7A and Fig. 7B show results of the rendering process based upon the instruction map of Fig. 6.

10 rasterizer, 20 shader unit, 30 shader, 32 register file, 34 arithmetic unit, 36 composer, 40 frame buffer, 50 controller, 52 instruction buffer, 60 instruction processor, 62 instruction decoder, 64 program counter, 66 instruction memory, 70 texture unit, 72 reference address generator, 74 interpolation unit, 76 texture memory, 80 instruction map, 100 rendering processing apparatus

### DETAILED DESCRIPTION OF THE INVENTION

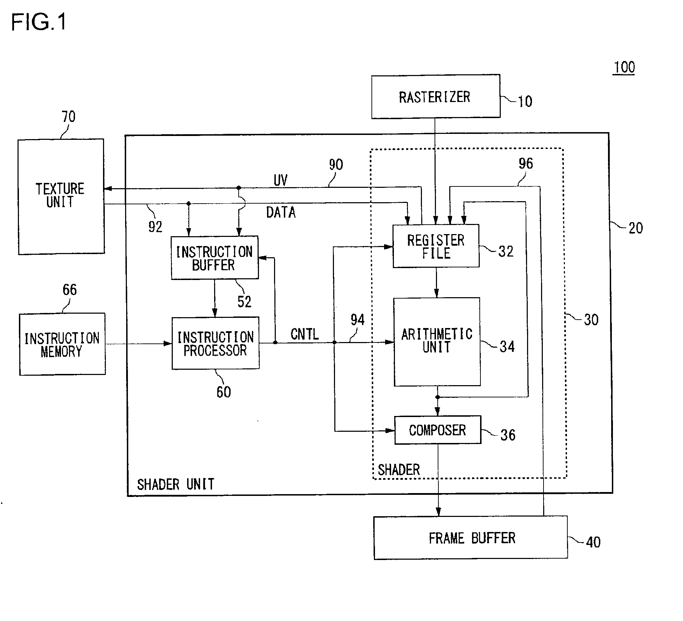

Fig. 1 is a configuration diagram of a rendering processing apparatus 100 according to an embodiment of the invention. The rendering processing apparatus 100 executes the rendering process to generate rendering data so as to display the data in a two-dimensional screen based upon three-dimensional model information.

A rasterizer 10 acquires vertex data of rendering primitives from a memory, another processor, or a vertex shader, and transforms the data to pixel information corresponding to a screen to be rendered into. A rendering primitive is generally a triangle. The rasterizer 10 performs a view transform on a triangle in a three-dimensional space into the triangle in a rendering plane by means of the projection transformation. Then, the rasterizer 10 converts the triangle into quantized pixels, row by row, while scanning the triangle in the rendering plane along the horizontal direction thereof. The rasterizer 10 develops the rendering primitives into pixels, and computes pixel information including color values represented by RGB, α value indicating degree of transparency, Z value indicating depth, and UV coordinate values of parameter coordinate values for referring to a texture attribute, for each pixel.

The rasterizer 10 generates units of rendering along the scan line to supply the generated units of rendering to a shader unit 20. The units of rendering supplied from the rasterizer 10 to the shader unit 20 are stacked in a queue. The shader unit 20 sequentially processes the units of rendering stacked in the queue.

Herein, "unit of rendering" generally denotes a given size of pixel area, and in some cases, is composed of one pixel or an assembly of plural pixels. Alternatively, the unit of rendering may denote one of sub-pixels or a set of sub-pixels, the sub-pixels being further subdivided from one pixel. In the description below of a rendering processing method unique to the embodiment of the invention, the whole unit of rendering will be viewed as a single pixel for brevity by concealing processes on individual pixels or sub-pixels within the unit of rendering, even if the unit of rendering is composed of plural pixels or plural sub-pixels. Therefore, in the description hereinafter, "unit of rendering" will be simply referred to as pixel.

The shader unit 20 includes: a shader 30 for performing a pipeline process on a pixel; and a control mechanism of the rendering arithmetic processing in the shader 30.

The shader 30 performs a shading process based upon pixel information computed by the rasterizer 10, and determines color values of a pixel. When a texture mapping is additionally performed, the shader 30 combines the color values of a texture acquired from a texture unit 70, calculates the color values of the pixel ultimately, and writes the pixel data in a frame buffer 40. The shader 30 further performs processes like fogging, alpha blending, etc., on the rendering data retained in the frame buffer 40, determines the color values of the pixel ultimately, and updates the pixel data in the frame buffer 40. The pixel data stored in the frame buffer 40 is output and displayed on a display apparatus.

The shader 30 includes a register file 32, an arithmetic unit 34, and a composer 36. The register file 32 is composed of a group of various resisters such as a general-purpose register and a register holding the result of a texture load instruction, and retains not only the pixel data fed from the rasterizer 10 but also intermediate data of arithmetic operation performed by the arithmetic unit 34 and the texture data fed from the texture unit 70. The register file 32 is also capable of retaining a portion of the pixel data or intermediate processing data stored in the frame buffer 40.

The arithmetic unit 34 is an assembly of plural arithmetic units, and performs an operation relating to a shading process. The arithmetic unit 34 reads out the pixel data from the register file 32 and executes a shader program for the pipeline processing on the pixel data. The arithmetic unit 34 writes back the result in the register file 32 or feeds the result to the composer 36.

The composer 36 converts the format of the pixel data, and performs read-modify-write (RMW) operation on the frame buffer 40. More specifically, the composer 36 reads the generated pixel data stored in the frame buffer 40, compares the generated pixel data with the pixel data calculated by the arithmetic unit 34, performs composite processes of the pixel data such as Z test or alpha blending, and writes back the updated pixel data in the frame buffer 40.

The frame buffer 40 serves as a buffer storing the pixel data generated by the shader 30 with screen coordinates. Such stored pixel data may be a final rendering image, or may be an intermediate image in the shading process.

The texture unit 70 performs a process for mapping the texture data to the pixel to be processed in the shader unit 20. The position of the texture to be mapped into pixels on a polygon plane is represented by a UV coordinate system of two-dimensional parameter coordinates. The texture unit 70 acquires the UV coordinate values of the texture to be mapped into pixels, from the shader 30, and converts the UV coordinate values into a reference address. Subsequently, the texture unit 70 acquires an attribute value corresponding to the reference address from the texture, and supplies the attribute value to the shader 30.

The texture unit 70 is capable of applying a different instruction on every pixel, by mapping instructions to pixels on a polygon plane in a similar manner to the texture mapping, by use of not only the texture map storing the attribute value of the texture in association with the UV coordinate values but also the instruction map storing data relating to the instruction in association with the UV coordinate values.

Hereinafter, the texture map and the instruction map are generically referred to as "map". Also, the value to be read from the map based upon the UV coordinate values is referred to as "referenced value".

The instruction map is same as the texture map from the structural viewpoint by which values are referred to according to the UV values. The instruction map, however, is different in the processing type from the texture map in a general sense in that the value to be stored in the map includes data relating to the instruction, and is so distinguished. To put in other words, the color values of the texture referred to by the map are combined with those of the pixels in the texture mapping. In the instruction map, however, the instruction referred to by the map is applied to the pixel, and is then executed. The instruction map and the texture map are different from each other in that applied to the pixel is data or program.

The data relating to the instruction stored in the instruction map is an instruction code itself or a branch target address of the program. In the former case, an instruction code identifiable by the bit length of each element of the instruction map is stored in the instruction map. For instance, in a case where the bit length of the referenced value stored in the instruction map is 24 bits, the instruction code that can be represented by 24 bits is directly stored in the instruction map. In a case where the branch target address is stored in the instruction map, a subroutine is stored in the branch target address of the program. The instruction code or subroutine to be executed on each pixel of the polygon plane is determined by mapping the instruction map to the polygon plane.

The attribute value of the texture stored in the texture map is the color values of the texture or an index for referring to the color values. In the latter case, the index is converted into actual color values with reference to the color lookup table.

When the referenced value acquired from the map based upon the UV coordinate values is the attribute value of the texture, the texture unit 70 writes the referenced value in the register file 32 of the shader 30 via a data path 92. When the referenced value acquired from the map is the data relating to the instruction, the texture unit 70 buffers the referenced value in an instruction buffer 52. In the instruction buffer 52, the instruction code fed from the texture unit 70 or the branch target address is to be stored.

An instruction processor 60 acquires the shader program for the object to be processed from an instruction memory 66, fetches and decodes the instruction code, and executes the decoded instruction. The instruction memory 66 may be configured as an instruction cache for caching the instruction loaded from the main memory, etc. Similarly, the instruction processor 60 decodes the instruction code retained in the instruction buffer 52 and executes the decoded instruction.

In order to execute the decoded instruction, the instruction processor 60 supplies a control signal CNTL relating to the instruction to be implemented, to the shader 30 via an instruction path 94, and controls the register file 32 of the shader 30, the arithmetic unit 34, and the composer 36. Controlled by the control signal CNTL supplied from the instruction processor 60, the shader 30 performs an arithmetic process relating to pixels by means of the pipeline processing.

In addition to the data relating to the instruction read from the instruction map stored in the texture unit 70, the data relating to the instruction read from the frame buffer 40 may be written into the instruction buffer 52. In this case, the frame buffer 40 is provided with the instruction map and the referenced value according to the UV coordinate values is written into the register file 32 from the frame buffer 40 via a data path 96. Then, the data relating to the instruction is written into the instruction buffer 52 via a path 90 for the UV coordinate values from the register file 32 to the instruction buffer 52. Alternatively, the data relating to the instruction may be written into the instruction buffer 52 directly from the frame buffer 40 without passing through the register file 32.

The time that it takes to transfer data from the frame buffer 40 to the register file 32 is shorter than the latency for acquiring the referenced value of the instruction map by use of the texture mapping after the shader 30 designates the UV coordinate values to the texture unit 70. Thus, the instruction map stored in the frame buffer 40 allows supplying the data relating to the instruction to the instruction buffer 52 at high speed. This will further improve the process performance.

Also, the intermediate value or the processing result of the pixel data stored in the frame buffer 40, instead of the form of instruction map, may be written into the instruction buffer 52 with or without passing through the register file 32 directly so as to be used as the data relating to the instruction. This enables the intermediate value or the processing result to be directly used as a portion of the program. Since the intermediate result of the arithmetic operation performed by the arithmetic unit 34 is also retained in the register file 32, this intermediate result may be supplied to the instruction buffer 52, via the path 90 for the UV coordinate values from the register file 32 to the instruction buffer 52 and be used as a portion of the program.

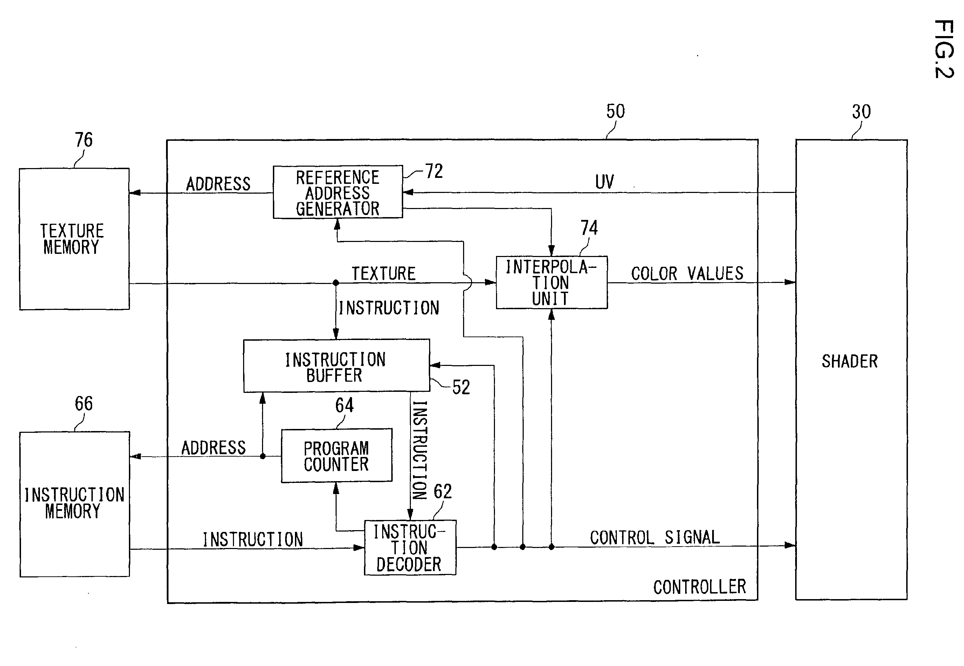

Fig. 2 shows a control mechanism of the shader unit 20, in detail. The figure shows a configuration of a controller 50 for controlling the rendering arithmetic process of the shader 30, in detail. A reference address generator 72, an interpolation unit 74, and a texture memory 76 correspond to the texture unit 70 of Fig. 1. An instruction decoder 62 and a program counter 64 correspond to the instruction processor 60 of Fig. 1.

The reference address generator 72 receives the UV coordinate values from the shader 30, converts the UV coordinate values into a reference address used for referring to the texture. The reference address generator 72 then refers to the texture memory 76 by feeding the reference address to an address bus. The texture memory 76 outputs the referenced value corresponding to the reference address, to a data bus.

When the referenced value output to the data bus according to the reference address from the texture memory 76 is an attribute value of the texture, the referenced value is supplied to the interpolation unit 74. When the referenced value is data relating to the instruction, the referenced value is supplied to the instruction buffer 52.

The interpolation unit 74 performs the interpolation process such as, for example, the bilinear interpolation process based upon the attribute values of the texture, and generates the color values corresponding to the UV coordinate values of the pixels. At this point, the attribute value of the texture is RGB value or an index of the RGB value. In the latter case, the interpolation unit 74 converts the index into the RGB value, by referring to the color lookup table. The interpolation unit 74 supplies the color values subjected to the interpolation process to the shader 30 via the data path.

The instruction buffer 52 retains the data relating to the instruction read out according to the reference address from the texture memory 76, namely, the instruction code or the branch target address. The instruction buffer 52 functions as a memory for caching the instruction code, similarly to the instruction memory 66. The instruction buffer 52 may be integrally constructed with the instruction memory 66, or may be separately constructed from the instruction memory 66.

The program counter 64 is a register for storing the address of the instruction code to be read in next in the shader program, and increments its count every time the instruction code designated by the program counter 64 is read in from the instruction memory 66.

The instruction decoder 62 reads out the instruction code from the shader program stored in the instruction memory 66 according to the program counter 64, and decodes the instruction code. At this time, when the program counter 64 designates the address of the instruction buffer 52, instead of the address of the instruction memory 66, the instruction decoder 62 reads out the instruction code from the instruction buffer 52, and decodes the instruction code.

The instruction decoder 62 decodes the instruction, and supplies a control signal for executing the decoded instruction to the instruction buffer 52, the reference address generator 72, the interpolation unit 74, and the shader 30, respectively to control each thereof.

In the shader 30, a control signal is supplied to the register file 32, the arithmetic unit 34, and the composer 36, respectively. Each of the supply timings of the control signal, however, is shifted in synchronization with each of the stages of the pipelines. The control signal for executing the instruction is supplied by shifting the number of cycles to be synchronized with the position in the pipeline. As the stage of the pipeline processing on the pixels proceeds, the instruction corresponding to the stage is supplied to the register file 32, the arithmetic unit 34, and the composer 36, respectively, so the pipeline processing is performed on pixels.

The rendering control procedure by use of the rendering processing apparatus 100 having the above configuration will be described with reference to a flowchart and a program example.

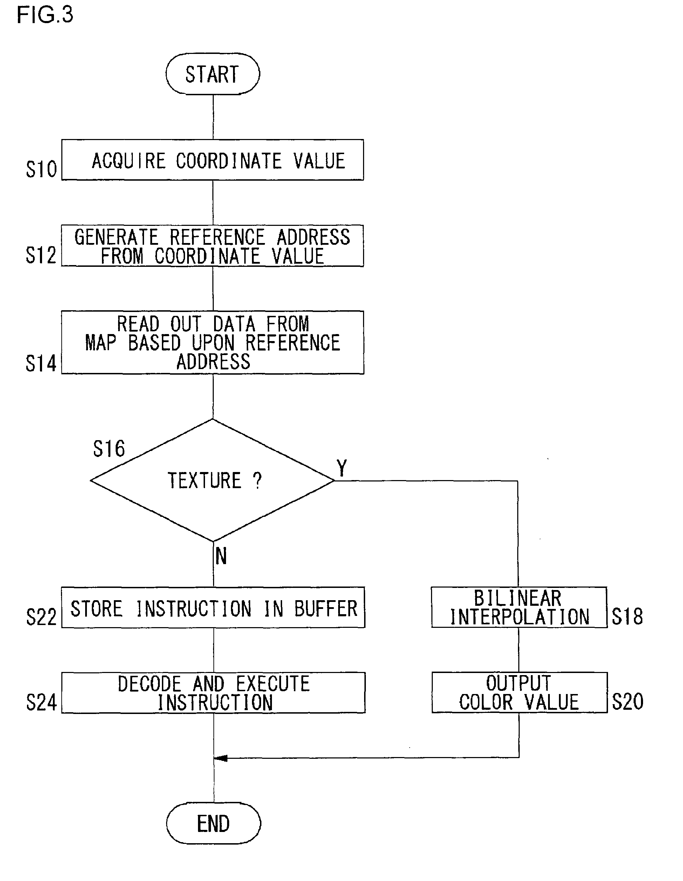

Fig. 3 is a flowchart of a rendering control procedure performed by the controller 50. The reference address generator 72 acquires the UV coordinate values from the shader 30 (S10). The reference address generator 72 generates the reference address for referring to the map with the UV coordinate values (S12). The reference address generator 72 feeds the reference address to the texture memory 76, and reads out the referenced value corresponding to the reference address from the map stored in the texture memory 76 (S14).

When the read-out referenced value is an attribute value of the texture (Y in S16), the interpolation unit 74 performs the bilinear interpolation (S18), and outputs the interpolated color values to the shader 30 (S20).

When the read-out referenced value is not an attribute value of the texture, to put in other words, when the read-out referenced value is the data relating to the instruction (N in S16), the data relating to the instruction is stored in the instruction buffer 52 (S22). The instruction decoder 62 reads the data relating to the instruction from the instruction buffer 52, decodes the data, and executes the instruction (S24).

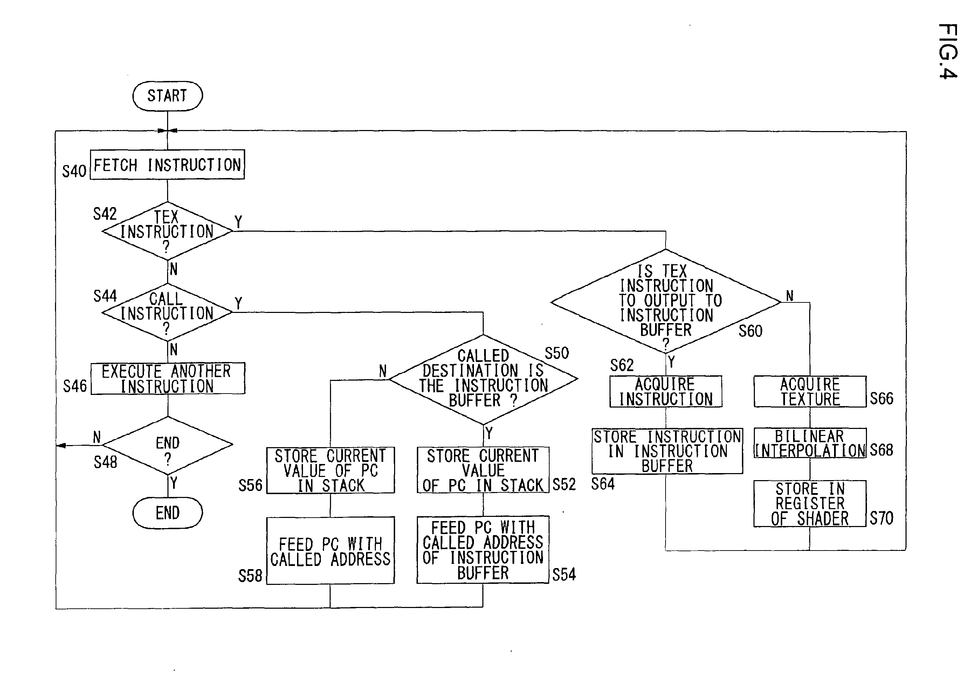

Fig. 4 is a flowchart of a decoding procedure of a shader program performed by the instruction decoder 62. An instruction code of the shader program is fetched from the instruction memory 66 (S40). The instruction decoder 62 decodes the fetched instruction. When the instruction is a TEX instruction for acquiring the texture (Y in S42), the control goes to step S60. When not (N in S42), the control goes to step S44.

In step S60, the instruction decoder 62 checks whether or not the TEX instruction is to output to the instruction buffer 52. Whether or not the TEX instruction is to output to the instruction buffer 52 is determined by the type of the register designated as a destination to which the instruction is to output.

When the TEX instruction is not to output to the instruction buffer 52 (N in S60), the TEX instruction is a texture load instruction for mapping the texture to pixels in reference to the texture map. The texture data is acquired from the texture map stored in the texture memory 76 (S66), the bilinear interpolation is performed by the interpolation unit 74 (S68), the interpolated color values are written into a given register of the register file 32 in the shader 30 (S70). Subsequent to the series of texture mapping processes described above, the control returns to step S40 and the process for the next instruction is successively performed.

If the TEX instruction is to output to the instruction buffer 52 (Y in step S60), the TEX instruction is a texture load instruction for applying the instruction to pixels in reference to the instruction map. The data relating to the instruction is acquired from the instruction map stored in the texture memory 76 (S62), and is then stored in the instruction buffer 52 (S64).

In step S44, when the decoded instruction is a CALL instruction for calling a subroutine (Y in S44), the control goes to step S50. When the decoded instruction is not a CALL instruction (N in S44), the control goes to step S46.

In step S50, the instruction decoder 62 checks whether or not the instruction buffer 52 is a destination to be called. Whether or not the instruction buffer 52 is the destination to be called is determined by the type of the register storing the address that should be called.

When the instruction buffer 52 is not the destination to be called and the call instruction is a normal one (N in S50), the current value of the program counter 64 is stored in a stack and saved (S56) and the call address in the instruction memory 66 is supplied to the program counter 64 (S58). When the call address in the instruction memory 66 is supplied to the program counter 64, the instruction code of the call address is fetched from the instruction memory 66, decoded by the instruction decoder 62, and executed. In this way, when there is a call instruction in the shader program, the program is branched to the subroutine and the subroutine is executed.

When the instruction buffer 52 is the destination to be called (Y in S50), the current value of the program counter 64 is stored in a stack and saved (S52) and the called address in the instruction buffer 52 is stored in the program counter 64 (S54). When the called address in the instruction buffer 52 is stored in the program counter 64, the instruction code of the called address is fetched from the instruction buffer 52, decoded by the instruction decoder 62, and executed. With this, the shader program itself executed on each rendering object to be rendered is not branched, and the subroutine is switched on a pixel-to-pixel basis by the instruction map.

When a series of processes of the CALL instruction are ended, the control returns to step S40 and the process for the next instruction is performed successively.

In step S46, the instruction decoder 62 performs various instructions such as the LD instruction and ST instruction, in addition to the TEX instruction and CALL instruction. When the program comes to the end and there is no instruction to be executed next (Y in S48), the decoding process of the program by use of the instruction decoder 62 is terminated. When there is another instruction (N in S48), the control returns to step S40 and the next decoding process is performed successively.

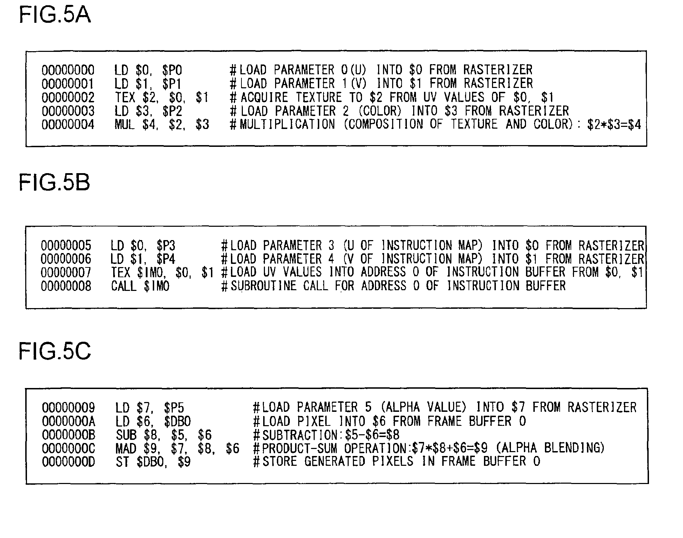

Fig. 5A through Fig. 5C show examples of the shader program for rendering an object. Fig. 5A shows addresses 0 to 4 of the shader program to execute a normal texture mapping.

The address 0 includes a load (LD) instruction to load the value of a parameter $P0 of a second argument acquired from the rasterizer 10 into a register $0 of a first argument. The U coordinate value of the pixel is stored in the parameter $P0. The address 1 of the program also includes a LD instruction to load the value of a parameter $P1 of the second argument acquired from the rasterizer 10 into a register $1 of the first argument. The V coordinate value of the pixel is stored in the parameter $P1.

The address number 2 includes a texture load (TEX) instruction to acquire the attribute value of the texture from the texture map stored in the texture unit 70, based upon the UV coordinate values respectively stored in the second and third arguments $0 and $1 and output the attribute value to the register $2 of the first argument.

The address 3 includes a LD instruction to load the value of the parameter $2 of the second argument acquired from the rasterizer 10 into a register $3 of a third argument. The color values of the pixel may be stored in the parameter $P2.

The address 4 includes a multiplication (MUL) instruction to multiply the value of the register $2 of the second argument by the value of the register $3 of the third argument and the resultant value is then assigned to a register $4 of the first argument. The color values of the texture to be mapped into pixels are stored in the register $2 of the second argument, and the original color values of the pixels are stored in the register $3 of the third argument. Thus, by performing the above multiplication, the color values of the texture are combined with the color values of the pixels, thereby making the color values subjected to the texture mapping available.

Fig. 5B shows addresses 5 to 8 of the shader program to execute the subroutine on a pixel-to-pixel basis based upon the instruction map.

The address 5 of the program is a LD instruction to load the value of the parameter $P3 of the second argument acquired from the rasterizer 10 into the register $0 of the first argument. The U coordinate value of the instruction map is stored in the parameter $P3. The address 6 of the program is also the LD instruction to load the value of the parameter $P4 of the second argument acquired from the rasterizer 10 into the register $1 of the first argument. The V coordinate value of the instruction map is stored in the parameter $P4.

The address 7 of the program is a TEX instruction to acquire the referenced value of the instruction map based upon the UV coordinate values stored in the registers $0 and $1 of the second and third arguments, respectively, and write the referenced value in the address of the instruction buffer 52 designated by the register $IMO of the first argument. The referenced value read out based upon the UV coordinate values from the instruction map is, in this case, a jump address of the program.

The address 8 of the program is a CALL instruction to call the address in the instruction buffer 52 designated by the register $IMO of the first argument. With this, the subroutine stored in the jump address stored in the address of $IM0 of the instruction buffer 52 is read from the instruction map, and the subroutine is executed on the pixel being processed.

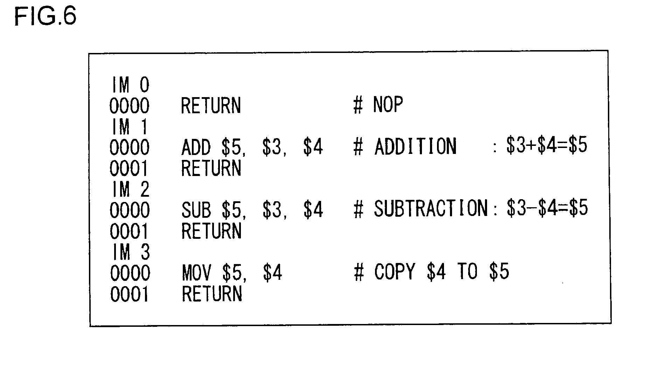

Fig. 6 shows the instruction map storing the subroutine in association with the UV coordinate values. There are provided addresses to be called IM0 through IM3 respectively in association with four texels respectively having the UV coordinate values of (0,0),(0,1),(1,0), and (1,1). A subroutine is respectively stored for each of the call addresses. The call address is read out based upon the UV coordinate values designated by the shader 30, and then the instruction decoder 62 calls the call address. Thus, the subroutines are switched and executed on a pixel-to-pixel basis.

The call address IM0 corresponding to the UV coordinate values (0,0), stores no operation (NOP), namely, the subroutine that returns without doing anything.

The call address IM1 corresponding to the UV coordinate values (0,1) stores an add (ADD) instruction, namely, the subroutine that adds the value of the register $4 of the third argument to the value of the register $3 of the second argument and stores the resultant value in the register $5 of the first argument.

The call address IM2 corresponding to the UV coordinate values (1,0) stores a subtraction (SUB) instruction, namely, the subroutine that subtracts the value of the register $4 of the third argument from the value of the register $3 of the second argument, and stores the resultant value in the register $5 of the first argument.

The call address IM3 corresponding to the UV coordinate values (1,1) stores a MOVE (MOV) instruction, namely, the subroutine that transfers the value of the register $4 of the second argument to the register $5 of the first argument.

Referring back to Fig. 5C, the rest of the operation of the shader program will be described continuously. Fig. 5C shows the addresses 9 to D of the shader program to perform an alpha blending on the pixel being processed with the pixel data stored in the frame buffer 40 and write back the final pixel data to the frame buffer 40.

The address 9 of the program is a LD instruction to load the value of the parameter $P5 of the second argument acquired from the rasterizer 10 into the register $7 of the first argument. The parameter $P5 stores an alpha (α) value.

The address A of the program is a LD instruction to acquire the pixel color values from the address of the frame buffer 40 designated by the register $DBO of the second argument and load the value into the register $6 of the first argument.

The address B of the program is a SUB instruction to subtract the value of the register $6 of the third argument from the value of the register $5 of the second argument and store the resultant value in the register $8 of the first argument.

The address C of the program is a product-sum (MAD) instruction to multiply the value in the register $7 of the second argument by the value in the register $8 of the third argument, add the value in the register $6 of a fourth argument, and store the resultant value in the register $9 of the first argument. With this, by use of the values of the two registers $5 and $6, α·( 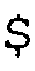 5- 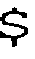 6)+ 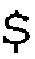 6 = α· 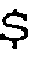 5+(1-α)· 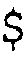 6 is calculated, so that the alpha blending is performed to blend the two pixel values at the ratio of (1-α): α.

The address D of the program is a store (ST) instruction to store the pixel color values subjected to the alpha blending stored in the register $9 of the second argument in the address of the frame buffer 40, designated by the register $DBO of the first argument.

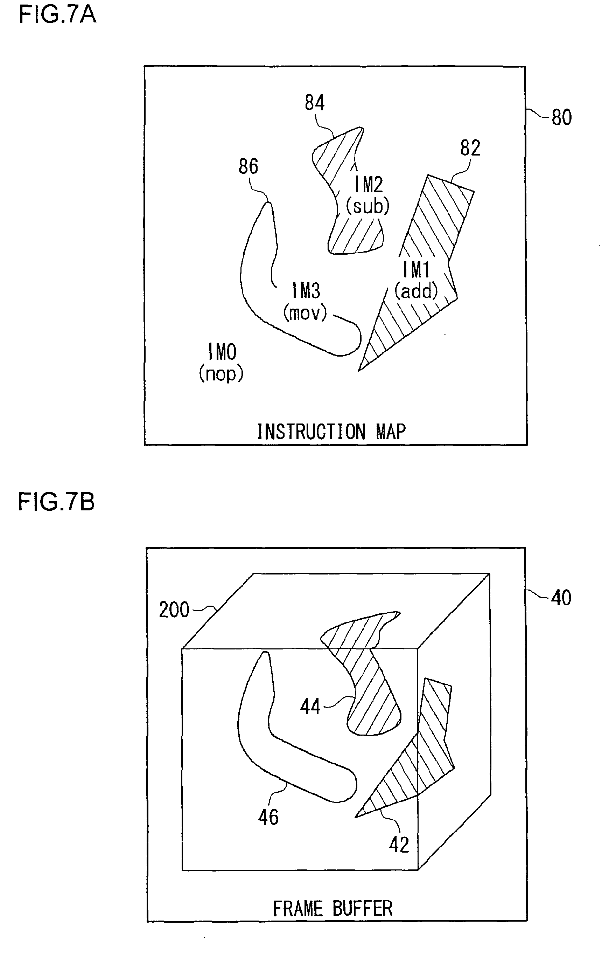

Fig. 7A and Fig. 7B illustrate objects on which a rendering process is performed such that a subroutine is performed on a pixel-to-pixel basis according to the instruction map.

Fig. 7A shows an example of an instruction map 80. The instruction map 80 has a data structure similar to that of the texture, and stores the data relating to the instruction in each of elements defined by the UV coordinate values. Here, the call address of the subroutine is stored.

A first area 82 of the instruction map 80 stores the call address IM1 to execute the ADD instruction on the pixels to be mapped to, as described with reference to Fig. 6. Also, a second area 84 of the instruction map 80 stores the call address IM2 to execute the SUB instruction on the pixels to be mapped to, as described with reference to Fig. 6.

Similarly, a third area 86 of the instruction map 80 stores the call address IM3 to execute the MOV instruction on the pixels to be mapped to, as described with reference to Fig. 6. In addition, since no instruction is applied on the pixels to be mapped to in other areas, the call address IMO is stored to execute NOP described with reference to Fig. 6.

Fig. 7B shows rendering data of an object 200 in the frame buffer 40, the rendering data being subjected to the rendering arithmetic processing based upon the instruction map 80. By mapping the instruction map 80 to the surface of the object 200, the subroutine of the call address designated by the instruction map 80 is performed on each of the pixels to be mapped to.

The first area 82 of the instruction map 80 is mapped to a first area 42 of the object 200, and ADD instruction of the subroutine in the call address IM1 stored in the instruction map 80 is executed on each of the mapped pixels. Also, the second area 84 of the instruction map 80 is mapped to a second area 44 of the object 200, and the SUB instruction of the subroutine in the call address IM2 stored in the instruction map 80 is executed on each of the mapped pixels.

Similarly, the third area 86 of the instruction map 80 is mapped to a third area 46 of the object 200, and the MOV instruction of the subroutine in the call address IM2 stored in the instruction map 80 is executed on each of the mapped pixels. In addition, since the area in which IM0 of the instruction map 80 is stored is mapped to another area in the object 200, NOP of the subroutine in the call address IM0 is merely executed, causing no change in the shading effect.

As described, by varying the instruction to be mapped depending on the area of the object surface based upon the instruction map, different shading effects are made available on a pixel-to-pixel basis. As an example of applying different shading algorithms on a pixel-to-pixel basis in the rendering object, for example, rust is shown only in one part of a vehicle body and the rest of the vehicle body is kept shiny. This highlights the difference of texture depending on the location in the surface of an identical object.

As described heretofore, according to the embodiment, the instruction map is mapped to the object surface by means of the texture mapping, thereby changing the instruction to be applied on each pixel, performing a rendering control to the details, and generating the high-quality rendering data. Even in a case where the rendering process is performed on the rendering object by use of an identical shader program, the instruction to be executed is designated on a pixel-to-pixel basis in the instruction map. Thus, the programmability is dramatically enhanced, enabling a complicated shader program with ease.

The instruction map eliminates the subroutine call in the shader program to be executed on an object basis, or accelerates the program even with the subroutine call. This will result in no generation of penalty due to the subroutine call and the return from the branched destination, and the processing efficiency will not be sacrificed. Therefore, even a complicated shader program is executed at high speed by the pixel pipeline processing.

In general, since a short program is repeatedly executed on a pixel-to-pixel basis in the pixel shader, the branch instruction directly incorporated in the shader program drastically degrades the processing efficiency. According to the embodiment, however, the program need not be exchanged with the whole core program initially loaded, the subroutine designated for each of the pixels is read by mapping the instruction map, and the different rendering algorithms are implemented by selectively changing the subroutine on a pixel-to-pixel basis. The rendering processing apparatus employed according to the embodiment provides a mechanism of pre-fetching the subroutine of the shader program by applying the texture mapping method to the instruction mapping.

The description of the invention given above is based upon the embodiments. The embodiments are illustrative in nature and various variations in constituting elements and processes involved are possible. Those skilled in the art would readily appreciated that such variations are also within the scope of the present invention. Such variations will now be described below.

In the above embodiment, the description is given with an example of a two-dimensional map that includes the UV coordinate values in association with the referenced value such as the attribute value of the texture or the data relating to the instruction. Alternatively, the texture map or instruction map having the layer structure may be employed such that the referenced value of the map in any one of layers can be read by providing plural layers of texture map or instruction map of the two-dimensional structure and designating the layer number in addition to the UV coordinate values.

In mapping the texture image together with the instruction map on the polygon surface, plural textures are caused to be used at the same time by one configuration and a suffix indicating the texture number is applied to the texture load instruction, so that the texture in which the texture map is stored may be used separately from the texture in which the instruction map is stored. There may be provided, for example, instructions such as TEX1, TEX2. In the TEX1, the first texture in which the color values of the texture are stored may be used. In the TEX2, the second texture in which the data relating to the instruction is stored may be used to differentiate from the TEX1. With this, after the texture image is mapped on an identical polygon, the instruction map is also mapped so that the instruction can be performed on a pixel-to-pixel basis. The texture of the above layer structure may be used for such purpose. For instance, the texture of the first layer may be the texture map and that of the second layer may be the instruction map.

The texture map is not limited to the texture image, but may store a normal vector used in the bump mapping or the height data used in displacement mapping, in association with the UV coordinate values. The map storing the above normal vector, the height data, or the function value in association with the UV coordinate values is also used as a texture map, and may be mapped to the pixels by the texture mapping.

The instruction map, for example, may preliminarily be generated in programming the shader program to be applied to the object. An automatic generator automatically generating an instruction map may be provided or a tool for supporting such automatic generation may be provided as a computer program, by providing a user interface for designating the shading process for every rendering area, and storing the instruction code relating to the designated shading process in association with the coordinate values of the pixels included in the rendering area, in order to support the generation of the instruction map. With a supporting tool for automatic generation of the instruction map, the instruction map is automatically generated on a pixel-to-pixel basis by merely designating the shading effect to be applied to the object surface. This allows a computer graphics designer who does not have the programming knowledge to write a complicated shader program on a pixel-to-pixel basis.

In the rendering processing apparatus 100 according to the embodiment, the instruction map is stored in the texture memory 76 of the texture unit 70. However, the instruction map may be stored in the frame buffer 40, and the data relating to the instruction may be read out from the instruction map stored in the frame buffer 40 and be then retained in the register file 32, so that the controller 50 may acquire the data relating to the instruction from the register file 32 and retain the data in the instruction buffer 52. Alternatively, the controller 50 may directly read out the data relating to the instruction from the instruction map stored in the frame buffer 40 and store the data in the instruction buffer 52. Further alternatively, the instruction map in the texture memory 76 and that in the frame buffer 40 may be used together.

In addition, the rendering processing apparatus 100 according to the embodiment may be configured not to include the texture unit 70, so that the controller 50 may acquire the data stored in the frame buffer 40 by directly designating the address in the frame buffer 40, without using the texture mapping method, and then may retain the data in the instruction buffer 52.
In such case, a portion of the rendering data stored in the frame buffer 40 or the intermediate data may be used as an instruction parameter. Similarly, the controller 50 may acquire the intermediate result of the operation performed by the arithmetic unit 34 and retained in the register file 32 so as to retain the intermediate result in the instruction buffer 52. By using the value retained in the register file 32 or retained in the frame buffer 40, the processing result, for example, is feed-backed to the shader program so that the instruction varying depending on the processing result is applicable to the rendering unit.

In the rendering processing apparatus 100 according to the embodiment, the instruction buffer 52 stores the date relating to the instruction referred to by the instruction map. Alternatively, the whole or a portion of instruction map may be retained in the instruction buffer 52.

The present invention is applicable to the field of graphic processing.

## Claims

1. A rendering processing apparatus comprising:
an instruction map storage unit which stores an instruction map in which data relating to an instruction is stored in association with two-dimensional coordinates;
an arithmetic processor which executes the instruction on the data of each unit of rendering of a rendering object subject to a rendering arithmetic processing on a unit-of-rendering basis; and
a controller which receives the data designating the two-dimensional coordinates for referring to the instruction map from the arithmetic processor, reads out the data relating to the instruction corresponding to the designated two-dimensional coordinates from the instruction map, and supplies the data to the arithmetic processor.

2. The rendering processing apparatus according to claim 1, wherein the arithmetic processor designates two-dimensional parameter coordinates relating to a surface of the rendering object, to which the instruction map is applied, as the two-dimensional coordinates for referring to the instruction map.

3. The rendering processing apparatus according to claim 1 or claim 2, wherein the controller comprises:
an instruction buffer which retains the data relating to the instruction read out from the instruction map by referring to the designated two-dimensional coordinates; and
an instruction processor which acquires the data relating the instruction retained in the instruction buffer, decodes the instruction, and supplies the decoded instruction to the arithmetic processor.

4. The rendering processing apparatus according to any one of claim 1 to claim 3,
wherein the arithmetic processor comprises:
a register which retains the data of the unit of rendering; and
an arithmetic unit which reads out the data of the unit of rendering from the register, and executes the instruction; and
wherein the controller supplies the data relating to the instruction to the arithmetic unit via a supplying path of a control signal, the data being read out from the instruction map by referring to the designated two-dimensional coordinates.

5. A rendering processing apparatus comprising:
a map storage unit which stores a map in which a given value is stored in association with two-dimensional coordinates;
an arithmetic processor which executes an instruction on data of each unit of rendering of a rendering object subject to a rendering arithmetic processing on a unit-of-rendering basis; and
a controller which receives the data designating the two-dimensional coordinates for referring to the map from the arithmetic processor, reads a value corresponding to the designated two-dimensional coordinates from the map, and supplies the value to the arithmetic processor,
wherein the map stores an attribute value of a texture to be applied to the unit of rendering or the data relating to the instruction to be applied to the unit of rendering, in association with the two-dimensional coordinates.

6. The rendering processing apparatus according to claim 5, wherein the arithmetic processor designates two-dimensional parameter coordinates relating to a surface of an object of a rendering object, to which the map is applied, as the two-dimensional coordinates for referring to the map.

7. The rendering processing apparatus according to claim 5, wherein when a value read out from the map by referring to the designated two-dimensional coordinates is the data relating to the instruction to be applied to the unit of rendering, the controller supplies the instruction via a supplying path of a control signal to the arithmetic processor.

8. The rendering processing apparatus according to any one of claim 5 to claim 7,
wherein the controller comprises:
an instruction buffer which retains the data relating to the instruction, when the value read out from the map by referring to the designated two-dimensional coordinates is the data relating to the instruction to be applied to the unit of rendering; and
an instruction processor which acquires the data relating the instruction retained in the instruction buffer, decodes the instruction, and supplies the decoded instruction to the arithmetic processor.

9. The rendering processing apparatus according to any one of claim 5 to claim 8,
wherein the arithmetic processor comprises:
a register which retains the data of the unit of rendering; and
an arithmetic unit which reads the data of the unit of rendering from the register, and executes the instruction; and
wherein the controller supplies the data based upon the attribute value of the texture to the register, when the data read out from the map by referring to the designated two-dimensional coordinates is the attribute value of the texture to be applied to the unit of rendering; and
wherein the controller supplies a control signal to execute the instruction to the arithmetic unit, when the data read out from the map by referring to the designated two-dimensional coordinates is the data relating to the instruction to be applied to the unit of rendering.

10. A rendering processing apparatus comprising:
an arithmetic processor which executes an instruction on data of each unit of rendering of a rendering object subject to a rendering arithmetic processing on a unit-of-rendering basis;
a frame buffer which stores rendering data derived from rendering performed by the arithmetic processor on each unit of rendering; and
a controller which supplies the instruction to be applied to the unit of rendering to the arithmetic processor,
wherein:
the frame buffer stores an instruction map in which the data relating to the instruction is stored in association with two-dimensional coordinates; and
the controller receives the data designating the two-dimensional coordinates for referring to the instruction map from the arithmetic processor, reads the data relating to the instruction corresponding to the designated two-dimensional coordinates, and supplies the data to the arithmetic processor.

11. A rendering processing apparatus comprising:
an arithmetic processor which executes an instruction on data of each unit of rendering of a rendering object subject to a rendering arithmetic processing on a unit-of-rendering basis;
a frame buffer which stores rendering data derived from rendering performed by the arithmetic processor on each unit of rendering; and
a controller which supplies the instruction to be applied to the unit of rendering to the arithmetic processor,
wherein the controller acquires at least a portion of the rendering data stored in the frame buffer as intermediate data, and uses the rendering data for the instruction to be applied on the unit of rendering.

12. A rendering processing apparatus comprising:
a register which retains data of each unit of rendering of a rendering object subject to a rendering arithmetic processing on a unit-of-rendering basis;
an arithmetic unit which reads the data of the unit of rendering from the register, and executes an instruction; and
a controller which supplies the instruction to be applied to the unit of rendering to the arithmetic unit,
wherein:
the register retains a processing result performed by the arithmetic unit, as intermediate data;
the controller acquires at least a portion of the intermediate data retained in the register, and uses the data for the instruction to be applied to the unit of rendering.

13. A rendering processing method comprising:
referring to an instruction map in which data relating to an instruction to be applied to each unit of rendering of a rendering object subject to a rendering arithmetic processing on a unit-of-rendering basis is stored in association with two-dimensional coordinates, so as to read the data relating to the instruction corresponding to two-dimensional parameter coordinates relating to a surface of the rendering object, to which the instruction map is applied, thereby performing an arithmetic processing on the each unit of rendering in accordance with the data relating to the instruction read out.

14. A rendering processing method comprising:
referring to a map in which an attribute value of a texture to be applied to each unit of rendering of a rendering object subject to a rendering arithmetic processing on a unit-of-rendering basis or data relating to an instruction to be applied to the each unit of rendering is stored in association with two-dimensional coordinates, so as to read a value corresponding to two-dimensional parameter coordinates relating to a surface of the rendering object, to which the map is applied, thereby performing an arithmetic processing on the unit of rendering in accordance with the instruction, when the value read out is the data relating to the instruction, or applying the texture to the unit of rendering in accordance with the attribute value, when the value read out is the attribute value of the texture.

15. A data structure of an instruction map which stores data relating to an instruction to be applied to each unit of rendering of a rendering object subject to a rendering arithmetic processing on a unit-of-rendering basis in association with two-dimensional parameter coordinates relating to a surface of the rendering object.
